# EUROPÄISCHE PATENTSCHRIFT

(11) **EP 3 811 037 B1**
(45) Veröffentlichungstag und Bekanntmachung des Hinweises auf die Patenterteilung: **09.11.2022**
(21) Anmeldenummer: 19723785.2
(22) Anmeldetag: 10.05.2019
(51) Int. Cl.: G01F 1/74, G01F 1/84

(54) **VERFAHREN ZUM BETREIBEN EINES CORIOLIS-MESSGERÄTS SOWIE EIN CORIOLIS-MESSGERÄT**
METHOD OF OPERATING A CORIOLIS MEASUREMENT DEVICE AND CORIOLIS MEASUREMENT DEVICE
PROCÉDÉ DE FONCTIONNEMENT D'UN DISPOSITIF DE MESURE CORIOLIS ET DISPOSITIF DE MESURE CORIOLIS

(30) Priorität: 20.06.2018 DE 102018114796
(43) Veröffentlichungstag der Anmeldung: 28.04.2021
(73) Patentinhaber: Endress+Hauser Flowtec AG, 4153 Reinach (CH)
(72) Erfinder: ZHU, Hao, 85354 Freising (DE)
(74) Vertreter: Waselikowski, Stefan
(86) Internationale Anmeldenummer: PCT/EP2019/062103
(87) Internationale Veröffentlichungsnummer: WO 2019/242935

(56) Entgegenhaltungen:
- EP-A2- 1 693 654
- WO-A1-2010/085980
- WO-A2-2012/027409
- DE-A1-102004 014 029
- US-A1- 2007 186 686

## Beschreibung

Die Erfindung betrifft ein Verfahren zum Betreiben eines Coriolis-Messgeräts zum Messen des Massedurchflusses bzw. einer Durchflussgeschwindigkeit eines durch mindestens ein Messrohr strömenden Mediums mit zumindest zwei nichtmischbaren Komponenten.

Coriolis-Messgeräte wie beispielsweise in der WO2006010687A1 beschrieben eignen sich zur Messung des Massedurchflusses sowie der Dichte eines mindestens ein Messrohr des Messgeräts durchströmenden Mediums.

Die DE102004014029A1 beschreibt ein Coriolis-Massedurchfluss-Messgerät, bei welchem über Zwischenwerte und Korrekturwerte finale Massedurchfluss-Messwerte erzeugt werden.

Für den Fall eines Mediums, welches aus einer einzigen Substanz besteht oder ausschließlich mehrere untereinander mischbare Substanzen aufweist, liefert ein solches Messgerät genaue Ergebnisse.

Jedoch gibt es verschiedene Einsatzgebiete, bei welchen diese Voraussetzung nicht erfüllt ist. Beispielsweise kann bei der Verarbeitung von Milch ein Medium vorliegen, welches in einem Hauptbestandteil flüssig ist, jedoch aber auch gasförmige und/oder feste Medienbestandteile aufweist. Falls diese weiteren Medienbestandteile in geringer Konzentration vorliegen und nicht homogen verteilt sind, kann diese Nichthomogenität eine Durchfluss- oder Dichtemessung erschweren.

Aufgabe der Erfindung ist es daher, ein Verfahren zum Betreiben eines Coriolis-Messgeräts sowie ein Coriolis-Messgerät vorzuschlagen, bei welchem die genannten Probleme umgangen werden.

Die Aufgabe wird gelöst durch ein Verfahren gemäß dem unabhängigen Anspruch 1 sowie durch ein Coriolis-Messgerät gemäß dem unabhängigen Anspruch 9. Bei einem erfindungsgemäßen Verfahren zum Betreiben eines Coriolis-Messgeräts zum Messen eines Massedurchflusses bzw. einer Durchflussgeschwindigkeit eines durch mindestens ein Messrohr strömenden Mediums mit zumindest zwei nichtmischbaren Komponenten,
weist jedes Messrohr einen Einlauf und einen Auslauf auf,
wobei mindestens zwei Sensoren durch mindestens einen Erreger angeregte Messrohrschwingungen erfassen,
wobei die Sensoren in Richtung einer Messrohrmittenlinie aufeinanderfolgend angeordnet sind, wobei ein erster Sensor an einer ersten Sensorposition eine erste, einlaufseitige Schwingungseigenschaft der Messrohrschwingung erfasst, und wobei ein zweiter Sensor an einer zweiten Sensorposition eine zweite, auslaufseitige Schwingungseigenschaft der Messrohrschwingung erfasst,
wobei eine lokale Konzentrationsschwankung oder Häufigkeitsschwankung mindestens einer weiteren zweiten Komponente die Messrohrschwingung in einem Bereich der lokalen Konzentrationsschwankung oder Häufigkeitsschwankung beeinflusst,
wobei die Beeinflussung zu einer Variation einer Amplitude und/oder einer Phase der Messrohrschwingung führt,
wobei in einem ersten Verfahrensschritt mittels der mindestens zwei Sensoren eine Fortbewegung der lokalen Konzentrationsschwankung oder Häufigkeitsschwankung erfasst wird,
wobei in einem zweiten Verfahrensschritt eine Geschwindigkeit der mindestens einen zweiten Komponente auf Basis der erfassten Fortbewegung der lokalen Konzentrationsschwankung oder Häufigkeitsschwankung berechnet wird,
wobei ein erster zeitlicher Verlauf der ersten Schwingungseigenschaft mit einem zweiten zeitlichen Verlauf der zweiten Schwingungseigenschaft verglichen wird,
wobei bei einem zeitlich versetzten Auftreten einer Variation des ersten Verlaufs bezüglich einer Variation des zweiten Verlaufs auf das Vorliegen einer lokalen Konzentrationsschwankung oder Häufigkeitsschwankung der mindestens einen zweiten Komponente geschlossen wird,
wobei die Geschwindigkeit der mindestens einen zweiten Komponente anhand des zeitlichen Versatzes des Auftretens der Variationen berechnet wird.

Die Geschwindigkeit der zweiten Komponente kann beispielsweise zu einer Plausibilitätsprüfung eines mittels des Corioliseffekts gemessenen Massedurchflusses herangezogen werden.

Nutzbare Schwingungseigenschaften sind hierbei beispielsweise eine Schwingungsamplitude oder eine Schwingungsphase oder eine Schwingungsfrequenz. Messtechnisch kann die Ermittelung einer Schwingungsamplitude, Schwingungsphase oder Schwingungsfrequenz beispielsweise durch Erfassen eines zeitlichen Verlaufs eines Sensorsignals und anschließender Signalauswertung erfolgen. Üblicherweise weist ein Schwingungssensor eines Coriolis-Messgeräts einen Permanentmagnetvorrichtung und eine Spulenvorrichtung auf, welche durch die Schwingungen relativ zueinander bewegt werden, wodurch in der Spule eine messbare und somit durch eine elektronische Mess-/Betriebsschaltung auswertbare elektrische Spannung induziert wird. Beispielsweise kann die Schwingungseigenschaft eine Phase eines Schwingungssensors oder eine Phasendifferenz zwischen zwei Schwingungssensoren sein. Der Verlauf kann aber auch ein Verlauf einer aus dem Sensorsignal abgeleitete Größe wie beispielsweise ein Massedurchfluss sein.

Damit ein zeitlicher Versatz der Variationen als durch eine Konzentrationsschwankung verursacht erkannt wird, muss der zeitliche Versatz größer sein als das Verhältnis aus Weglänge entlang der Messrohrmittenlinie zwischen den entsprechenden Sensoren und der Schallgeschwindigkeit des Mediums bzw. der ersten Komponente. Der Fachmann kann hierbei auch auf Erfahrungswerte zurückgreifen. Sobald ein zeitlicher Versatz geringer ist, als das Verhältnis bzw. der Erfahrungswert, kann der Versatz im Hinblick auf die Erkennung einer Konzentrationsschwankung als nicht existent aufgefasst werden. Bei der Erkennung einer Variation, welche beispielsweise ein Sensordurchflusssignal überlagert, kann auf übliche Signalverarbeitung, wie beispielsweise Signalflankenerkennung, Signalfilterung wie beispielsweise Fouriertransformation, oder Autokorrelation zurückgegriffen werden.

In einer Ausgestaltung erfasst ein dritter Sensor eine dritte Schwingungseigenschaft der Messrohrschwingung an einer dritten Sensorposition, wobei die dritte Sensorposition zwischen der ersten Sensorposition und der zweiten Sensorposition befindlich ist,
wobei mindestens zwei der folgenden Verläufe verglichen werden:
der erste Verlauf der ersten Schwingungseigenschaft, der zweite Verlauf der zweiten Schwingungseigenschaft, ein dritter zeitlicher Verlauf der dritten Schwingungseigenschaft,
wobei bei einem zeitlich versetzten Auftreten einer Variation eines Verlaufs bezüglich einer Variation eines anderen Verlaufs auf das Vorliegen einer lokalen Konzentrationsschwankung oder Häufigkeitsschwankung der mindestens einen zweiten Komponente geschlossen wird,
wobei die Geschwindigkeit der mindestens einen zweiten Komponente anhand des zeitlichen Versatzes des Auftretens der Variationen berechnet wird
und/oder wobei
eine erste Differenz zwischen der ersten Schwingungseigenschaft und der dritten Schwingungseigenschaft sowie eine zweite Differenz zwischen der dritten Schwingungseigenschaft und der zweiten Schwingungseigenschaft gebildet wird,
wobei bei einer zeitlich versetzten Variation eines vierten Verlaufs der ersten Differenz bezüglich einer Variation eines fünften Verlaufs der zweiten Differenz auf das Vorliegen einer lokalen Konzentrationsschwankung oder Häufigkeitsschwankung der mindestens einen zweiten Komponente geschlossen wird,
wobei die Geschwindigkeit der mindestens einen zweiten Komponente anhand des zeitlichen Versatzes des Auftretens der Variationen der Differenzen berechnet wird.

Mit drei Sensoren kann ähnlich wie mit zwei Sensoren auf jeweils ein Versatz zwischen zwei verschiedenen Sensoren geachtet werden. Es können aber auch zwei Differenzen von Signaleigenschaften zwischen zwei aufeinanderfolgenden Sensoren gebildet werden und jeweils eine Variation der Differenz zu einer Erkennung einer Konzentrationsschwankung herangezogen werden. So führt eine lokale Konzentrationsschwankung zu einer Variation bei einer Differenz. Dies lässt sich beispielsweise im Rahmen einer herkömmlichen Coriolis-Durchflussmessung zwischen zwei aufeinanderfolgenden Sensoren umsetzen, bei welchen Schwingungseigenschaften einer auf dem Corioliseffekt basierenden Messrohrschwingung erfasst werden.

In einer Ausgestaltung basiert ein Vergleich der Verläufe von Schwingungseigenschaften sowie die Ermittlung des zeitlichen Versatzes von Variationen auf mindesten einem der folgenden Vorgehensweisen:
Bildung einer Kreuzkorrelation der Verläufe,
Ermitteln einer Position mindestens eines Extremalwerts der jeweiligen Variationen.

Durch Kreuzkorrelation kann eine Ähnlichkeit verschiedener Verläufe erfasst und ein zeitlicher Versatz von Charakteristiken der Verläufe zuverlässig berechnet werden.

In einer Ausgestaltung ist das mindestens eine Messrohr zumindest abschnittsweise gebogen, wobei die erste Sensorposition in Strömungsrichtung vor der Biegung oder in einem Anfangsbereich der Biegung ist, und wobei die zweite Sensorposition in Strömungsrichtung nach der Biegung oder in einem Endbereich der Biegung ist,
wobei zumindest ein Unterschied zwischen Variationen verschiedener Verläufe herangezogen wird, um zumindest eine Eigenschaft zumindest einer zweiten Komponente zu bestimmen,
wobei mindestens eine der folgenden Eigenschaften der Variationen betrachtet wird:
   Amplitude, Breite, Asymmetrie.

Durch die Biegung kann es zu einer zentrifugalkraftbedingten Verlagerung zwischen der ersten Komponente und mindestens einer der mindestens einen zweiten Komponente kommen. Ein solche Verlagerung kann zu einer charakteristischen Veränderung der Variation des zweiten Verlaufs bzw. dritten Verlaufs gegenüber der Variation des ersten Verlaufs führen. Beispielsweise kann eine gasförmige zweite Komponente in einer flüssigen ersten Komponente in Richtung des Biegungsinneren gedrängt werden. Auf diese Art und Weise lassen sich beispielsweise Rückschlüsse auf die Viskosität der ersten Komponente oder auf ein Verhältnis Stokeszahl zu Viskosität der ersten Komponente ziehen.

In einer Ausgestaltung ist die erste Komponente flüssig, wobei die mindestens eine zweite Komponente flüssig, fest oder gasförmig ist.

In einer Ausgestaltung ist die erste Komponente ein Gemisch aus mischbaren Substanzen,
und/oder wobei mindestens eine der mindestens einen zweiten Komponente ein Gemisch aus mischbaren Substanzen ist.

In einer Ausgestaltung wird in einem dritten Verfahrensschritt aus der Geschwindigkeit der mindestens einen zweiten Komponente eine Geschwindigkeit der ersten Komponente ermittelt,
wobei beim Ermitteln der Geschwindigkeit der ersten Komponente mindestens eine der folgenden Größen herangezogen wird:
Neigungswinkel des mindestens einen Messrohrs bezüglich der Schwerkraft,
Viskosität der ersten Komponente,
Massendichte der ersten Komponente und/oder der mindestens einen zweiten Komponente, Stokeszahl,
Charakteristischer Durchmesser der zweiten Komponente in der ersten Komponente.

Bei der Ermittelung der Durchflussgeschwindigkeit der ersten Komponente kann das Fließverhalten der mindestens einen zweiten Komponente in der ersten Komponente berücksichtigt werden. So kann bei geneigtem Messrohr eine gasförmige zweite Komponente in einer flüssigen ersten Komponente durch Auftriebskräfte eine andere Geschwindigkeit gegenüber dem Messrohr aufweisen, wie die erste Komponente. Dies ist beispielsweise relevant bei geringer Viskosität der ersten Komponente. Ein andere relevante Größe, welche herangezogen werden kann, ist die Stokeszahl insbesondere in Verbindung mit einer Viskosität der ersten Komponente, wobei die Stokeszahl die Bedeutung der Massenträgheit einer zweiten Medienkomponente in der ersten Medienkomponente angibt. Alternativ kann auch ein charakteristischer Durchmesser einer Ansammlung der zweiten Komponente als Ersatz für die Stokeszahl herangezogen werden.

In einer Ausgestaltung wird mittels einer Massendichte sowie der Geschwindigkeit der ersten Komponente und/oder einer Massendichte der zweiten Komponente sowie der Geschwindigkeit der zweiten Komponente ein Massedurchfluss des Mediums bestimmt wird.

Ein erfindungsgemäßes Coriolis-Messgerät umfasst:
Mindestens ein Messrohr zum Führen eines Mediums;
mindestens einen Erreger, welcher dazu eingerichtet ist, das Messrohr zu Schwingungen anzuregen;
mindestens zwei Sensoren, welche dazu eingerichtet sind, die Schwingungen des Messrohrs zu erfassen;
eine elektronische Mess-/Betriebsschaltung, welche dazu eingerichtet ist, den Erreger sowie die Sensoren zu betreiben und Massedurchfluss- bzw. Durchflussgeschwindigkeits- bzw. Dichtemesswerte zu bestimmen und auszugeben, sowie das erfindungsgemäße Verfahren durchzuführen;
wobei das Messgerät insbesondere ein Elektronikgehäuse zum Behausen der elektronischen Mess-/Betriebsschaltung aufweist.

In einer Ausgestaltung weist das Messgerät am Einlauf sowie am Auslauf des mindestens einen Messrohrs jeweils eine Befestigungsvorrichtung auf, welche dazu eingerichtet ist, die Position jeweils eines äußeren Schwingungsknotens zu definieren,
wobei die Befestigungsvorrichtung beispielsweise mindestens eine Platte aufweist, welche Platte mindestens ein Messrohr zumindest teilweise umfasst.

Im Folgenden wird die Erfindung anhand von Ausführungsbeispielen beschrieben.
Fig. 1 skizziert eine beispielhafte erfindungsgemäße Anordnung von Sensoren und einem Erreger an einem Messrohr.
Fig. 2 zeigt beispielhafte Signalverläufe von Sensoren.
Fig. 3 skizziert einen erfindungsgemäßen Verfahrensablauf.
Fig. 4 zeigt ein beispielhaftes erfindungsgemäßes Coriolismessgerät.

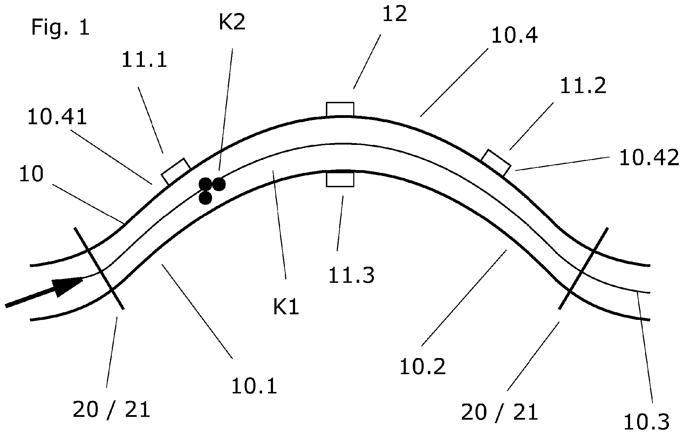

Fig. 1 skizziert eine beispielhafte erfindungsgemäße Sensor- sowie Erregeranordnung an einem Messrohr 10 eines Coriolis-Messgeräts mit einem ersten Sensor 11.1 auf einer Einlaufseite 10.1, einem zweiten Sensor 11.2 auf einer Auslaufseite 10.2 des Messrohrs und einem mittig angeordneten dritten Sensor 10.3. Das Messrohr wird mittels eines Erregers 10 zu Schwingungen angeregt. Jeweils eine Befestigungsvorrichtung 20 an jeweils einem Messrohrende definiert einen äußeren Schwingungsknotenpunkt. Die Befestigungsvorrichtung kann wie hier skizziert eine Platte 21 aufweisen. Das durch das Messrohr strömende Medium weist eine hauptsächlich vorkommende erste Komponente K1 auf, welche zumindest eine zweite Komponente K2 mit sich führt. Die zweite Komponente kann bei ausreichend geringer Konzentration lokal ungleich verteilt sein, so dass eine lokale Beeinflussung des schwingenden Messrohrs stattfindet. Die lokale Beeinflussung kann genutzt werden, um eine Fortbewegungsgeschwindigkeit der zweiten Komponente mittels der Sensoren zu erfassen. Daraus kann zusätzlich eine Durchflussgeschwindigkeit der ersten Komponente abgeleitet werden. Die Anordnung der Sensoren sowie des Erregers dient zur Veranschaulichung und ist nicht einschränkend auszulegen. Ein Erfindungsgemäßes Verfahren kann auch mit zwei Sensoren oder mit mehr als drei Sensoren durchgeführt werden.

Der erste Sensor an einer ersten Sensorposition ist dazu eingerichtet, zumindest eine erste, einlaufseitige Schwingungseigenschaft der Messrohrschwingung zu erfassen. Entsprechendes gilt für den zweiten, auslaufseitigen Sensor sowie den zentral angeordneten dritten Sensor. Schwingungseigenschaften, welche von den Sensoren erfasst werden, sind beispielsweise Amplitude, Phase oder Schwingungsfrequenz.

Die Erfassung einer lokalen Konzentrationsschwankung oder Häufigkeitsschwankung kann auf verschiedene Arten durchgeführt werden. Beispielsweise kann ein zeitlicher Verlauf einer mit einem Sensor erfassten Schwingungseigenschaft mit einem Verlauf vom einem anderen Sensor erfassten Schwingungseigenschaft verglichen werden, wobei bei einem zeitlich versetzten Auftreten einer Variation eines Verlaufs bezüglich einer Variation des jeweils anderen Verlaufs auf das Vorliegen einer lokalen Konzentrationsschwankung oder Häufigkeitsschwankung der mindestens einen zweiten Komponente geschlossen wird. Bei Vorliegen zweier Sensoren kann also ein erster, vom ersten Sensor erfassten Verlauf einer Schwingungseigenschaft mit einem zweiten, vom zweiten Sensor erfassten Verlauf einer Schwingungseigenschaft verglichen werden. Bei Vorliegen dreier oder mehr Sensoren können also ein dritter Verlauf und entsprechende weitere Verläufe erfasst und untereinander verglichen werden.

Bei Vorliegen dreier oder mehr Sensoren können jedoch auch Differenzen zwischen verschiedenen Verläufen gebildet werden. Ein Vergleich von verschiedenen Differenzen kann bei Vorliegen von einer lokalen Konzentrationsschwankung oder Häufigkeitsschwankung mindestens einer weiteren zweiten Komponente entsprechend zu einer Berechnung einer Fortbewegungsgeschwindigkeit der zweiten mindestens einen zweiten Komponente herangezogen werden.

Die Geschwindigkeit der mindestens einen zweiten Komponente wird anhand des zeitlichen Versatzes des Auftretens der Variationen berechnet. Damit ein zeitlicher Versatz der Variationen als durch eine Konzentrationsschwankung verursacht erkannt wird, muss der zeitliche Versatz größer sein als das Verhältnis aus Weglänge entlang der Messrohrmittenlinie zwischen den entsprechenden Sensoren und der Schallgeschwindigkeit des Mediums bzw. der ersten Komponente. Der Fachmann kann hierbei auch auf Erfahrungswerte zurückgreifen. Sobald ein zeitlicher Versatz geringer ist, als das Verhältnis bzw. der Erfahrungswert, kann der Versatz im Hinblick auf die Erkennung einer Konzentrationsschwankung als nicht existent aufgefasst werden. Bei der Erkennung einer Variation, welche beispielsweise ein Sensordurchflusssignal überlagert, kann auf übliche Signalverarbeitung, wie beispielsweise Signalflankenerkennung, Signalfilterung wie beispielsweise Fouriertransformation, oder Autokorrelation zurückgegriffen werden.

Das in Fig. 1 skizzierte Messrohr 10 weist eine Biegung 10.4 auf, welche Biegung einen Anfangsbereich 10.41 sowie einen Endbereich 10.42 aufweist. Durch die Biegung kann es zu einer zentrifugalkraftbedingten Verlagerung zwischen der ersten Komponente und mindestens einer der mindestens einen zweiten Komponente kommen. Ein solche Verlagerung kann zu einer charakteristischen Veränderung der Variation des zweiten Verlaufs bzw. dritten Verlaufs gegenüber der Variation des ersten Verlaufs führen. Beispielsweise kann eine gasförmige zweite Komponente in einer flüssigen ersten Komponente in Richtung des Biegungsinneren gedrängt werden. Durch Anordnen des ersten Sensors 11.1 im Anfangsbereich der Biegung oder vor der Biegung und Anordnen des zweiten Sensors 11.2 im Endbereich der Biegung oder nach der Biegung kann die charakteristische Veränderung der Variation gemessen und ausgewertet werden. Auf diese Art und Weise lassen sich beispielsweise Rückschlüsse auf die Viskosität der ersten Komponente oder auf ein Verhältnis Stokeszahl zu Viskosität der ersten Komponente ziehen.

Die Erfindung ist nicht auf ein Coriolis-Messgerät mit einem Messrohr beschränkt, sondern auf Coriolis-Messgeräte mit einer beliebigen Messrohrzahl wie beispielsweise zwei Messrohre oder vier Messrohre, welche vier Messrohre beispielsweise paarweise angeordnet sein können, anwendbar. Die Erfindung ist auch nicht auf Messrohre beschränkt, welche eine Biegung aufweisen. Der Fachmann kann die Erfindung auch bei einem Coriolis-Messgerät mit zumindest einem geraden Messrohr einsetzen.

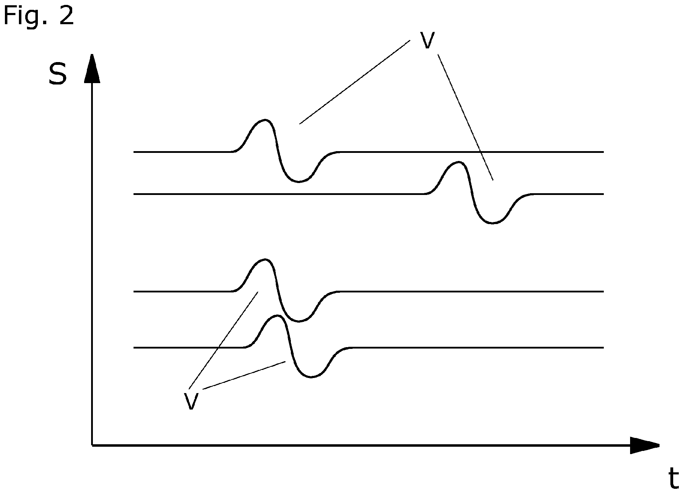

Fig. 2 skizziert auf vereinfachte Art und Weise zwei Paare von Verläufen von durch verschiedene Sensoren 11 erfassten Schwingungseigenschaften des Messrohrs, wobei bei dem oberen Paar ein großer zeitlicher Versatz zwischen Variationen V auf eine lokale Konzentrationsschwankung oder Häufigkeitsschwankung mindestens einer zweiten Komponente K2 des Mediums hindeutet, wobei der zeitliche Versatz für eine Berechnung der Fortbewegungsgeschwindigkeit heranziehbar ist. Bei dem unteren Paar ist nur ein geringer zeitlicher Versatz gegeben. Somit ist eine lokale Konzentrationsschwankung oder Häufigkeitsschwankung mindestens einer weiteren zweiten Komponente auszuschließen. Vielmehr kann eine Durchflussänderung für die Variation verantwortlich gemacht werden. Die in Fig. 2 skizzierten Verläufe können Verläufe von durch Sensoren erfasste Schwingungseigenschaften oder Verläufe von Differenzen von durch Sensoren erfasste Schwingungseigenschaften sein.

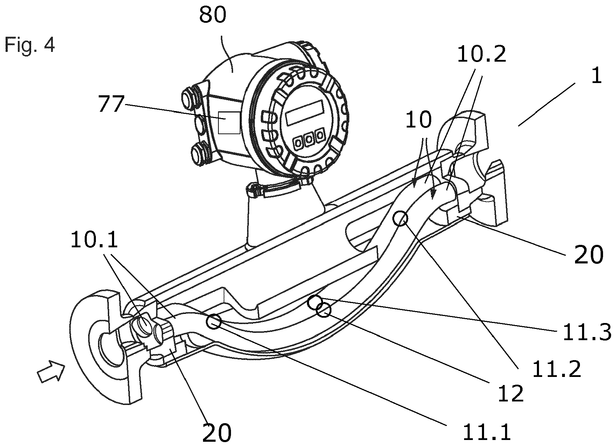

Üblicherweise weist ein Schwingungssensor eines Coriolis-Messgeräts einen Permanentmagnetvorrichtung und eine Spulenvorrichtung auf, welche durch die Schwingungen relativ zueinander bewegt werden, wodurch in der Spule eine messbare und somit durch eine elektronische Mess-/Betriebsschaltung 77, siehe Fig. 4, auswertbare elektrische Spannung induziert wird. Beispielsweise kann die Schwingungseigenschaft eine Phase eines Schwingungssensors oder eine Phasendifferenz zwischen zwei Schwingungssensoren sein.

Damit ein zeitlicher Versatz der Variationen als durch eine Konzentrationsschwankung verursacht erkannt wird, muss der zeitliche Versatz größer sein als das Verhältnis aus Weglänge entlang der Messrohrmittenlinie zwischen den entsprechenden Sensoren und der Schallgeschwindigkeit des Mediums bzw. der ersten Komponente. Der Fachmann kann hierbei auch auf Erfahrungswerte zurückgreifen. Sobald ein zeitlicher Versatz geringer ist, als das Verhältnis bzw. der Erfahrungswert, kann der Versatz im Hinblick auf die Erkennung einer Konzentrationsschwankung als nicht existent aufgefasst werden. Bei der Erkennung einer Variation, welche beispielsweise ein Sensordurchflusssignal überlagert, kann auf übliche Signalverarbeitung, wie beispielsweise Signalflankenerkennung, Signalfilterung wie beispielsweise Fouriertransformation, oder Autokorrelation zurückgegriffen werden.

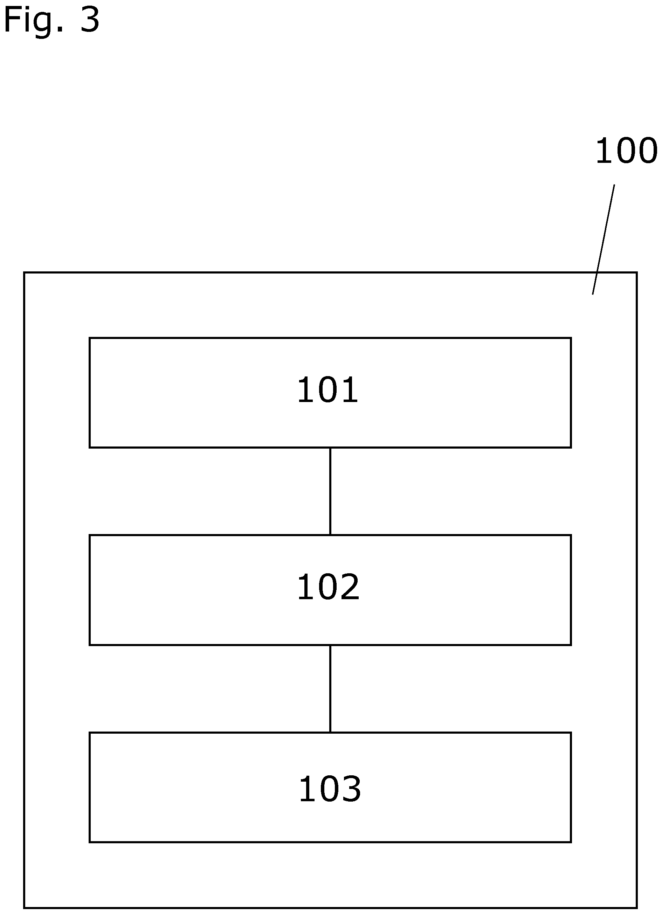

Fig. 3 skizziert ein erfindungsgemäßes Verfahren 100, bei welchem in einem ersten Verfahrensschritt 101 mittels der mindestens zwei Sensoren eine Fortbewegung der lokalen Konzentrationsschwankung oder Häufigkeitsschwankung erfasst wird.

In einem zweiten Verfahrensschritt 102 wird eine Geschwindigkeit der mindestens einen zweiten Komponente auf Basis der erfassten Fortbewegung der lokalen Konzentrationsschwankung oder Häufigkeitsschwankung berechnet.

In einem dritten Verfahrensschritt 103 wird aus der Geschwindigkeit der mindestens einen zweiten Komponente eine Geschwindigkeit der ersten Komponente ermittelt,
wobei beim Ermitteln der Geschwindigkeit der ersten Komponente mindestens eine der folgenden Größen herangezogen wird:
Neigungswinkel des mindestens einen Messrohrs bezüglich der Schwerkraft, Viskosität der ersten Komponente,
Massendichte der ersten Komponente und/oder der mindestens einen zweiten Komponente.

Fig. 4 skizziert ein beispielhaftes erfindungsgemäßes Coriolis-Messgerät 1, welches zwei Messrohre 10 mit jeweils einem Einlauf 10.1 und einem Auslauf 10.2 aufweist. Drei Sensoren 11.1, 11.2 und 11.3 sind dazu eingerichtet, vom Erreger erzeugte Messrohrschwingungen zu erfassen. Das Coriolis-Messgerät weist eine elektronische Mess-/Betriebsschaltung 77 auf, welche dazu eingerichtet ist, den Erreger sowie die Sensoren zu betreiben und Massedurchfluss- bzw. Durchflussgeschwindigkeits- bzw. Dichtemesswerte zu bestimmen und auszugeben, wobei das Messgerät ein Elektronikgehäuse 80 zum Behausen der elektronischen Mess-/Betriebsschaltung aufweist. Das Messgerät weist am Einlauf 10.1 sowie am Auslauf 10.2 der beiden Messrohre jeweils eine Befestigungsvorrichtung 20 auf, welche dazu eingerichtet sind, die Position jeweils eines äußeren Schwingungsknotens der Messrohrschwingung zu definieren. Alternativ kann das Messgerät beispielsweise auch nur ein Messrohr oder auch vier Messrohre aufweisen. Der Fachmann ist bei der Umsetzung der Erfindung nicht auf eine spezielle Anzahl von Messrohren beschränkt. Er kann die Erfindung auch bei einem geraden Messrohr einsetzen.

### Bezugszeichenliste

- 1: Coriolis-Messgerät
- 10: Messrohr
- 10.1: Einlauf
- 10.2: Auslauf
- 10.3: Messrohrmittenlinie
- 10.4: Biegung
- 10.41: Anfangsbereich der Biegung
- 10.42: Endbereich der Biegung
- 11: Sensor
- 11.1: erster Sensor
- 11.2: zweiter Sensor
- 11.3: dritter Sensor
- 12: Erreger
- 20: Befestigungsvorrichtung
- 21: Platte
- 77: elektronische Mess-/Betriebsschaltung
- 80: Gehäuse
- 100: Verfahren
- 101: erster Verfahrensschritt
- 102: zweiter Verfahrensschritt
- 103: dritter Verfahrensschritt
- K1: erste Komponente
- K2: zweite Komponente
- V: Variation

## Patentansprüche

1. Verfahren (100) zum Betreiben eines Coriolis-Messgeräts (1) zum Messen eines Massedurchflusses bzw. einer Durchflussgeschwindigkeit eines durch mindestens ein Messrohr strömenden Mediums mit zumindest zwei nichtmischbaren Komponenten (K1, K2), welche eine erste Komponente (K1) und mindestens eine zweite Komponente (K2) umfassen,
wobei jedes Messrohr (10) einen Einlauf (10.1) und einen Auslauf (10.2) aufweist,
wobei mindestens zwei Sensoren (11) durch mindestens einen Erreger (12) angeregte Messrohrschwingungen erfassen,
wobei die Sensoren in Richtung einer Messrohrmittenlinie (10.3) aufeinanderfolgend angeordnet sind, wobei ein erster Sensor (11.1) an einer ersten Sensorposition zumindest eine erste, einlaufseitige Schwingungseigenschaft der Messrohrschwingung erfasst, und wobei ein zweiter Sensor (11.2) an einer zweiten Sensorposition zumindest eine zweite, auslaufseitige Schwingungseigenschaft der Messrohrschwingung erfasst,
wobei eine lokale Konzentrationsschwankung oder Häufigkeitsschwankung der mindestens einen zweiten Komponente (K2) die Messrohrschwingung in einem Bereich der lokalen Konzentrationsschwankung oder Häufigkeitsschwankung beeinflusst,
wobei die Beeinflussung zu einer Variation einer Amplitude und/oder einer Phase und/oder einer Schwingungsfrequenz der Messrohrschwingung führt,
**dadurch gekennzeichnet, dass**
in einem ersten Verfahrensschritt (101) mittels der mindestens zwei Sensoren eine Fortbewegung der lokalen Konzentrationsschwankung oder Häufigkeitsschwankung erfasst wird,
wobei ein zeitlicher Verlauf der vom ersten Sensor erfassten Schwingungseigenschaft mit einem zweiten zeitlichen Verlauf der vom zweiten Sensor erfassten Schwingungseigenschaft verglichen wird,
wobei bei einem zeitlich versetzten Auftreten einer Variation des ersten Verlaufs bezüglich einer Variation des zweiten Verlaufs auf das Vorliegen einer lokalen Konzentrationsschwankung oder Häufigkeitsschwankung der mindestens einen zweiten Komponente geschlossen wird,
und dass in einem zweiten Verfahrensschritt (102) eine Geschwindigkeit der mindestens einen zweiten Komponente auf Basis der erfassten Fortbewegung der lokalen Konzentrationsschwankung oder Häufigkeitsschwankung berechnet wird,
wobei die Geschwindigkeit der mindestens einen zweiten Komponente anhand des zeitlichen Versatzes des Auftretens der Variationen berechnet wird.

2. Verfahren nach Anspruch 1,
wobei ein dritter Sensor (11.3) eine Schwingungseigenschaft der Messrohrschwingung an einer dritten Sensorposition erfasst, wobei die dritte Sensorposition zwischen der ersten Sensorposition und der zweiten Sensorposition befindlich ist,
wobei mindestens zwei der folgenden zeitlichen Verläufe verglichen werden:
der erste Verlauf, der zweite Verlauf, ein dritter zeitlicher Verlauf,
wobei bei einem zeitlich versetzten Auftreten einer Variation eines Verlaufs bezüglich einer Variation eines anderen Verlaufs auf das Vorliegen einer lokalen Konzentrationsschwankung oder Häufigkeitsschwankung der mindestens einen zweiten Komponente geschlossen wird,
wobei die Geschwindigkeit der mindestens einen zweiten Komponente anhand des zeitlichen Versatzes des Auftretens der Variationen berechnet wird
und/oder wobei
eine erste Differenz zwischen dem ersten Verlauf und dem dritten Verlauf sowie eine zweite Differenz zwischen der dritten Verlauf und dem zweiten Verlauf gebildet wird,
wobei bei einer zeitlich versetzten Variation eines vierten Verlaufs der ersten Differenz bezüglich einer Variation eines fünften Verlaufs der zweiten Differenz auf das Vorliegen einer lokalen Konzentrationsschwankung oder Häufigkeitsschwankung der mindestens einen zweiten Komponente geschlossen wird,
wobei die Geschwindigkeit der mindestens einen zweiten Komponente anhand des zeitlichen Versatzes des Auftretens der Variationen der Differenzen berechnet wird.

3. Verfahren nach Anspruch 1 oder 2,
wobei ein Vergleich der Verläufe sowie die Ermittlung des zeitlichen Versatzes von Variationen auf mindesten einem der folgenden Vorgehensweisen basiert:
Bildung einer Kreuzkorrelation der Verläufe,
Ermitteln einer Position mindestens eines Extremalwerts der jeweiligen Variationen,

4. Verfahren nach einem der vorigen Ansprüche,
wobei das mindestens eine Messrohr im Ruhezustand zumindest abschnittsweise gebogen ist, wobei die erste Sensorposition in Strömungsrichtung vor der Biegung (10.4) oder in einem Anfangsbereich (10.41) der Biegung ist, und wobei die zweite Sensorposition in Strömungsrichtung nach der Biegung oder in einem Endbereich (10.42) der Biegung ist,
wobei zumindest ein Unterschied zwischen Variationen verschiedener Verläufe herangezogen wird, um zumindest eine Eigenschaft zumindest einer zweiten Komponente zu bestimmen,
wobei mindestens eine der folgenden Eigenschaften der Variationen betrachtet wird:
Amplitude, Breite, Asymmetrie.

5. Verfahren nach einem der vorigen Ansprüche,
wobei die erste Komponente flüssig ist, wobei die mindestens eine zweite Komponente flüssig, fest oder gasförmig ist.

6. Verfahren nach einem der vorigen Ansprüche,
wobei die erste Komponente ein Gemisch aus mischbaren Substanzen ist,
und/oder wobei die mindestens eine der mindestens einen zweiten Komponente ein Gemisch aus mischbaren Substanzen ist.

7. Verfahren nach einem der vorigen Ansprüche,
wobei in einem dritten Verfahrensschritt (103) aus der Geschwindigkeit der mindestens einen zweiten Komponente eine Geschwindigkeit der ersten Komponente ermittelt wird,
wobei beim Ermitteln der Geschwindigkeit der ersten Komponente mindestens eine der folgenden Größen herangezogen wird:
Neigungswinkel des mindestens einen Messrohrs bezüglich der Schwerkraft,
Viskosität der ersten Komponente,
Massendichte der ersten Komponente und/oder der mindestens einen zweiten Komponente, Stokeszahl,
Charakteristischer Durchmesser.

8. Verfahren nach Anspruch 7,
wobei mittels einer Massendichte sowie der Geschwindigkeit der ersten Komponente und/oder einer Massendichte der zweiten Komponente sowie der Geschwindigkeit der zweiten Komponente ein Massedurchfluss des Mediums bestimmt wird.

9. Coriolis-Messgerät zur Umsetzung des Verfahrens gemäß einem der vorigen Ansprüche umfassend:
Mindestens ein Messrohr (10) zum Führen eines Mediums, wobei jedes Messrohr einen Einlauf (10.1) und einen Auslauf (10.2) aufweist;
mindestens einen Erreger (12), welcher dazu eingerichtet ist, das Messrohr zu Schwingungen anzuregen;
mindestens zwei Sensoren (11), welche dazu eingerichtet sind, die Schwingungen des Messrohrs zu erfassen;
eine elektronische Mess-/Betriebsschaltung (77), welche dazu eingerichtet ist, den Erreger sowie die Sensoren zu betreiben und Massedurchfluss- bzw. Durchflussgeschwindigkeits- bzw. Dichtemesswerte zu bestimmen und auszugeben sowie das Verfahren auszuführen;
wobei das Messgerät insbesondere ein Elektronikgehäuse (80) zum Behausen der elektronischen Mess-/Betriebsschaltung aufweist.

10. Coriolis-Messgerät nach Anspruch 9,
wobei das Messgerät am Einlauf (10.1) sowie am Auslauf (10.2) des mindestens einen Messrohrs jeweils eine Befestigungsvorrichtung (20) aufweist, welche dazu eingerichtet ist, die Position jeweils eines äußeren Schwingungsknotens zu definieren,
wobei die Befestigungsvorrichtung beispielsweise mindestens eine Platte (21) aufweist, welche Platte mindestens ein Messrohr zumindest teilweise umfasst.

11. Coriolis-Messgerät nach Anspruch 9 oder 10,
wobei das mindestens eine Messrohr im Ruhezustand zumindest abschnittsweise gebogen ist,
wobei die erste Sensorposition in Strömungsrichtung vor der Biegung (10.4) oder in einem Anfangsbereich (10.41) der Biegung ist, und wobei die zweite Sensorposition in Strömungsrichtung nach der Biegung oder in einem Endbereich (10.42) der Biegung ist.

## Claims

1. Procedure (100) designed to operate a Coriolis measuring device (1) for measuring a mass flow or a flow velocity of a medium flowing through at least one measuring tube with at least two immiscible components (K1, K2), which comprise a first component (K1) and at least a second component (K2),
wherein each measuring tube (10) has an inlet (10.1) and an outlet (10. 2),
wherein at least two sensors (11) measure vibrations of the measuring tube generated by at least one exciter (12),
wherein the sensors are arranged one after the other in the direction of a measuring tube center line (10.3), wherein a first sensor (11.1) measures, at a first sensor position, at least a first vibration characteristic, on the inlet side, of the measuring tube vibration, and a second sensor (11.2) measures, at a second sensor position, at least a second vibration characteristic, on the outlet side, of the measuring tube vibration,
wherein a local concentration variation or frequency variation of the at least one second component (K2) influences the measuring tube vibration in an area of the local concentration variation or frequency variation,
wherein the influence leads to a variation of an amplitude and/or a phase and/or a vibration frequency of the measuring tube vibration,
**characterized in that**
in a first procedural step (101), a movement of the local concentration variation or the local frequency variation is measured by means of the at least two sensors,
wherein a temporal curve of the vibration characteristic measured by the first sensor is compared to a second temporal curve of the vibration characteristic measured by the second sensor,
wherein, in the event of a time-shifted occurrence of a variation of the first curve in relation to a variation of the second curve, one concludes the presence of a local concentration variation or a frequency variation of the at least one second component,
and **in that**, in a second procedural step (102), a speed of the at least one second component is calculated on the basis of the measured movement of the local concentration variation or frequency variation,
wherein the speed of the at least one second component is calculated on the basis of the temporal offset of the occurrence of the variations.

2. Procedure as claimed in Claim 1,
wherein a third sensor (1 1.3) measures a vibration characteristic of the measuring tube vibration at a third sensor position, wherein the third sensor position is located between the first sensor position and the second sensor position,
wherein at least two of the following temporal curves are compared:
the first curve, the second curve, a third temporal curve,
wherein, in the event of a time-delayed occurrence of a variation of a curve in relation to a variation of another curve, one concludes the presence of a local concentration variation or a frequency variation of the at least one second component,
wherein the speed of the at least one second component is calculated using the temporal offset of the occurrence of the variations
and/or wherein
a first difference between the first curve and the third curve as well as a second difference between the third curve and the second curve is formed,
wherein, in the event of a time-shifted variation of a fourth curve of the first difference in relation to a variation of a fifth curve of the second difference, one concludes the presence of a local concentration variation or of a frequency variation of the at least one second component,
wherein the speed of the at least one second component is calculated using the temporal offset of the occurrence of the variations of the differences.

3. Procedure as claimed in Claim 1 or 2,
wherein a comparison of the curves and the determination of the temporal offset of variations are based on at least one of the following procedures:
Formation of a cross-correlation of the curves,
Determination of a position of at least one extremum value of the various variations.

4. Procedure as claimed in one of the previous claims,
wherein the at least one measuring tube is curved at least in parts in the rest state, wherein the first sensor position is located upstream from the bend (10.4) in the flow direction or in an initial area (10.41) of the bend, and wherein the second sensor position is located downstream from the bend in the flow direction or in an end section (10.42) of the bend,
wherein at least one difference between the variations of the different curves is used to determine at least one characteristic of at least a second component,
wherein at least one of the following characteristics of the variations is considered:
Amplitude, width, asymmetry.

5. Procedure as claimed in one of the previous claims,
wherein the first component is liquid, wherein the at least one second component is liquid, solid or gaseous.

6. Procedure as claimed in one of the previous claims,
wherein the first component is a mix of miscible substances,
and/or wherein at least one of the at least one second component is a mix of miscible substances.

7. Procedure as claimed in one of the previous claims,
wherein, in a third procedural step (103), a speed of the first component is determined from the speed of the at least one second component,
wherein, when determining the speed of the first component, at least one of the following variables is used:
Angle of inclination of the at least one measuring tube in relation to the force of gravity,
Viscosity of the first component,
Mass density of the first component and/or of the at least one second component,
Stokes number,
Characteristic diameter.

8. Procedure as claimed in Claim 7,
wherein a mass flow of the medium is determined by means of a mass density and the speed of the first component and/or a mass density of the second component and the speed of the second component.

9. Coriolis measuring device designed to implement the procedure as claimed in one of the previous claims, comprising:
at least one measuring tube (10) designed to conduct a medium, wherein each measuring tube has an inlet (10.1) and an outlet (10.2);
at least an exciter (12), which is designed to excite the measuring tube to vibrate;
at least two sensors (11), which are designed to capture the vibrations of the measuring tube;
an electronic measuring/operating circuit (77), wherein said circuit is designed to operate the exciter and the sensors, and to determine and output measured values for the mass flow or the flow velocity or the density, and to execute the procedure;
wherein the measuring device particularly has an electronics housing (80) to house the electronic measuring/operating circuit.

10. Coriolis measuring device as claimed in Claim 9,
wherein the measuring device has a fastening unit (20) on both the inlet (10.1) and the outlet (10.2) of the at least one measuring tube, wherein said unit is designed to define the position of an outer vibration node in each case,
wherein the fastening unit has, for example, at least a plate (21), wherein said plate at least partially surrounds at least one measuring tube.

11. Coriolis measuring device as claimed in Claim 9 or 10,
wherein the at least one measuring tube is curved at least in part in the rest state,
wherein the first sensor position is upstream from the bend (10.4) in the flow direction or in an initial area (10.41) of the bend, and wherein the second sensor position is downstream from the bend in the flow direction or in the end area (10.42) of the bend.

## Revendications

1. Procédé (100) destiné à l'exploitation d'un débitmètre Coriolis (1) en vue de mesurer un débit massique ou une vitesse d'écoulement d'un produit s'écoulant à travers au moins un tube de mesure avec au moins deux composants non miscibles (K1, K2), lesquels comprennent un premier composant (K1) et au moins un deuxième composant (K2),
pour lequel chaque tube de mesure (10) comporte une entrée (10.1) et une sortie (10. 2),
pour lequel au moins deux capteurs (11) mesurent les vibrations du tube de mesure générées par au moins un excitateur (12),
les capteurs étant disposés l'un après l'autre dans la direction d'une ligne médiane (10.3) du tube de mesure, un premier capteur (11.1) mesurant, à une première position de capteur, au moins une première caractéristique de vibration, côté entrée, de la vibration du tube de mesure, et un deuxième capteur (11.2) mesurant, à une deuxième position de capteur, au moins une deuxième caractéristique de vibration, côté sortie, de la vibration du tube de mesure,
une variation de concentration locale ou une variation de fréquence de l'au moins un deuxième composant (K2) influençant la vibration du tube de mesure dans une zone de la variation de concentration locale ou de la variation de fréquence,
l'influence conduisant à une variation d'une amplitude et/ou d'une phase et/ou d'une fréquence de vibration du tube de mesure,
**caractérisé**
**en ce que**, dans une première étape de procédé (101), un déplacement de la variation de concentration locale ou de la variation de fréquence locale est mesuré au moyen des au moins deux capteurs,
une évolution dans le temps de la caractéristique de vibration mesurée par le premier capteur étant comparée à une deuxième évolution dans le temps de la caractéristique de vibration mesurée par le deuxième capteur,
l'apparition décalée dans le temps d'une variation de la première évolution par rapport à une variation de la deuxième évolution permettant de conclure à la présence d'une variation de concentration locale ou d'une variation de fréquence de l'au moins un deuxième composant,
et **en ce que**, dans une deuxième étape de procédé (102), une vitesse de l'au moins un deuxième composant est calculée sur la base du déplacement mesuré de la variation de concentration locale ou de la variation de fréquence,
pour lequel la vitesse de l'au moins un deuxième composant est calculée sur la base du décalage temporel de l'apparition des variations.

2. Procédé selon la revendication 1,
pour lequel un troisième capteur (1 1.3) mesure une caractéristique de la vibration du tube de mesure à une troisième position de capteur, la troisième position de capteur étant située entre la première position de capteur et la deuxième position de capteur,
pour lequel au moins deux des courbes temporelles suivantes sont comparées :
la première courbe, la deuxième courbe, une troisième courbe temporelle,
pour lequel, en cas d'apparition décalée dans le temps d'une variation d'une courbe par rapport à une variation d'une autre courbe, on conclut à la présence d'une variation de concentration locale ou d'une variation de fréquence de l'au moins un deuxième composant,
pour lequel la vitesse de l'au moins un deuxième composant est calculée à l'aide du décalage dans le temps de l'apparition des variations
et/ou pour lequel
une première différence entre la première courbe et la troisième courbe ainsi qu'une deuxième différence entre la troisième courbe et la deuxième courbe sont formées,
pour lequel, en cas de variation décalée dans le temps d'une quatrième courbe de la première différence par rapport à une variation d'une cinquième courbe de la deuxième différence, on conclut à la présence d'une variation de concentration locale ou d'une variation de fréquence de l'au moins un deuxième composant,
pour lequel la vitesse de l'au moins un deuxième composant est calculée à l'aide du décalage temporel de l'apparition des variations des différences.

3. Procédé selon la revendication 1 ou 2,
pour lequel une comparaison des courbes ainsi que la détermination du décalage temporel des variations sont basées sur au moins une des procédures suivantes :
Formation d'une corrélation croisée des courbes,
Détermination d'une position d'au moins une valeur extrême des variations respectives.

4. Procédé selon l'une des revendications précédentes,
pour lequel l'au moins un tube de mesure est courbé au moins par sections à l'état de repos, la première position du capteur étant située en amont de la courbure (10.4) dans le sens de l'écoulement ou dans une zone initiale (10.41) de la courbure, et la deuxième position du capteur étant située en aval de la courbure ou dans une zone finale (10.42) de la courbure,
pour lequel au moins une différence entre des variations de différents tracés est utilisée pour déterminer au moins une propriété d'au moins un deuxième composant,
au moins une des propriétés suivantes des variations étant considérée :
Amplitude, largeur, asymétrie.

5. Procédé selon l'une des revendications précédentes,
pour lequel le premier composant est liquide, l'au moins un deuxième composant étant liquide, solide ou gazeux.

6. Procédé selon l'une des revendications précédentes,
pour lequel le premier composant est un mélange de substances miscibles,
et/ou pour lequel l'au moins un de l'au moins un deuxième composant est un mélange de substances miscibles.

7. Procédé selon l'une des revendications précédentes,
pour lequel, dans une troisième étape de procédé (103), une vitesse du premier composant est déterminée à partir de la vitesse de l'au moins un deuxième composant,
pour lequel, lors de la détermination de la vitesse du premier composant, on utilise au moins l'une des grandeurs suivantes :
Angle d'inclinaison de l'au moins un tube de mesure par rapport à la force de gravité,
Viscosité du premier composant,
Densité corrigée du premier composant et/ou de l'au moins un deuxième composant,
Nombre de Stokes,
Diamètre caractéristique.

8. Procédé selon la revendication 7,
pour lequel un débit massique du produit est déterminé au moyen d'une densité de masse ainsi que de la vitesse du premier composant et/ou d'une densité corrigée du deuxième composant ainsi que de la vitesse du deuxième composant.

9. Débitmètre Coriolis destiné à la mise en oeuvre du procédé selon l'une des revendications précédentes comprenant :
au moins un tube de mesure (10) destiné au guidage d'un produit, chaque tube de mesure présentant une entrée (10.1) et une sortie (10.2) ;
au moins un excitateur (12), lequel est conçu pour faire vibrer le tube de mesure ;
au moins deux capteurs (11), lesquels sont conçus pour mesurer les vibrations du tube de mesure ;
un circuit électronique de mesure/d'exploitation (77), lequel circuit est conçu pour exploiter l'excitateur ainsi que les capteurs, et pour déterminer et émettre des valeurs mesurée de débit massique ou de vitesse d'écoulement ou de densité, ainsi que pour exécuter le procédé ;
l'appareil de mesure comprenant notamment un boîtier électronique (80) pour loger le circuit électronique de mesure/d'exploitation.

10. Débitmètre Coriolis selon la revendication 9,
pour lequel l'appareil de mesure présente à l'entrée (10.1) ainsi qu'à la sortie (10.2) de l'au moins un tube de mesure respectivement un dispositif de fixation (20), lequel dispositif est conçu pour définir la position respectivement d'un nœud de vibration extérieur,
pour lequel le dispositif de fixation présente par exemple au moins une plaque (21), laquelle plaque entoure au moins partiellement au moins un tube de mesure.

11. Débitmètre Coriolis selon la revendication 9 ou 10,
pour lequel l'au moins un tube de mesure est courbé au moins par sections à l'état de repos,
pour lequel la première position du capteur est en amont de la courbure (10.4) dans le sens de l'écoulement ou dans une zone initiale (10.41) de la courbure, et pour lequel la deuxième position du capteur est en aval de la courbure dans le sens de l'écoulement ou dans une zone finale (10.42) de la courbure.
